Europäisches Patentamt

European Patent Office

Office européen des brevets

(19)

(11) Publication number: **0 017 962**
**B1**

(12) **EUROPEAN PATENT SPECIFICATION**

(45) Date of publication of patent specification: **18.01.84**

(21) Application number: **80102024.9**

(22) Date of filing: **15.04.80**

(51) Int. Cl.³: **C 08 L 79/08,** C 08 K 5/06, C 08 K 3/22, C 08 K 3/38

(54) **Flame retardant polyglutarimide compositions and method of making them.**

(30) Priority: **24.04.79 US 32981**

(43) Date of publication of application:
**29.10.80 Bulletin 80/22**

(45) Publication of the grant of the patent:
**18.01.84 Bulletin 84/3**

(84) Designated Contracting States:
**BE CH DE FR GB IT LI NL SE**

(56) References cited:
**DE - A - 1 941 189**
**DE - A - 2 148 276**
**DE - A - 2 243 847**
**US - A - 4 105 621**

**Flame Retardancy of Polymeric Materials, Vol. 2,**
**P. 14**

(73) Proprietor: **Rohm and Haas Company**
**Independence Mall West**
**Philadelphia, Pennsylvania 19105 (US)**

(72) Inventor: **Weese, Richard Henry**
**R. R. 1 Glenwood Drive**
**Washington Crossing Pa. 18977 (US)**
Inventor: **Crook, Evan Haney**
**1013 Eagle Lane**
**Cherry Hill NJ 08003 (US)**

(74) Representative: **Deufel, Paul, Dr. et al,**
**Patentanwälte Müller-Boré, Deufel, Schön, Hertel**
**Lewald, Otto Isartorplatz 6 Postfach 26 02 47**
**D-8000 München 26 (DE)**

Flame retardant polyglutarimide compositions and method of making them

This invention is concerned with flame retardant polyglutarimide compositions and method of making them.

The field to which the invention relates is the imparting of flame retardant properties to thermoplastic polyglutarimide-containing compositions.

Many hundreds of compounds are known which impart flame resistance to thermoplastic systems, see Kirk-Othmer, Encyclopaedia of Chemical Technology, Second Edition, Volume 9, page 301. However, it has generally proved extremely difficult to achieve a high degree of flame resistance without harming other physical properties such as impact strength and heat distortion temperature, especially in aliphatic polymers. The particular flame retardants used in this invention are well known *per se*, but they have not previously been shown in combination with polyglutarimides as flame retardants in which respect they have surprisingly little adverse effect on other physical properties, particularly impact strength and heat distortion temperature.

The compositions of the invention comprise a mixture of polyglutarimide and decabromodiphenyl oxide having an average particle size of less than 12 $\mu$m. Advantageously the compositions of the invention also contain one or more of antimony trioxide and zinc borate, which we have found to act synergistically with the decabromodiphenyl oxide in these compositions. We have discovered the unexpected importance of the particle size of the decabromodiphenyl oxide on the physical properties of the compositions.

The polyglutarimides used in the present invention are preferably those disclosed in Belgian patent 848,496. Other polyglutarimides are also suitable in this invention, but those disclosed by the Belgian patent are very much preferred because of their superior properties. Generally, these glutarimide polymers are prepared from acrylic polymers such as poly(methyl methacrylate) and copolymers thereof by reaction as described with ammonia or methylamine so that 1 to 100% by mole of the acrylic ester groups are imidized. The optimum results are obtained with degrees of imidization of 20 to 100% by mole. The weight average molecular weights of the preferred glutarimide polymers are typically about 100,000 to 200,000.

It is also very highly preferred to further include in the compositions of the invention butadiene- or acrylic-based multiple stage polymer to impart additional impact strength to the polyglutarimide component. The butadiene-based multiple stage polymer can be of MBS (methacrylate-butadiene-styrene) type or ABS (acrylonitrile-butadiene-styrene) type. For example, multiple stage polymers having a butadiene-styrene first stage, a styrene second stage, and a methylmethacrylate-styrene final stage or an acrylonitrile-styrene final stage can be used.

The acrylic-based multiple stage polymer can have a cross-linked butylacrylate first stage and a methylmethacrylate final stage.

Ratios of rubber stage to hard stage can be varied from about 1:1 to about 9:1 by weight.

Suitable amounts of butadiene or acrylic-based multiple stage polymer are typically about 5 to 40% by weight, and preferably about 15 to 35% by weight of the blend of the polyglutarimides, butadiene-based or acrylic-based impact modifier, flame retardant, and optional polycarbonate. European Patent Application No. 79302791.3 teaches the inclusion of polycarbonate in polyglutarimide compositions to achieve unexpectedly high Izod impact strength and Gardner VHIT impact values, especially when the polycarbonate comprises at least 12% by weight of the ternary blend of polyglutarimide, multiple stage polymer and polycarbonate.

The concept of using a combination of butadiene-based and acrylic-based multiple stage polymers is more fully discussed and claimed in European Patent Application 80 102 359.9 filed after this application and claiming priority from United States Serial No. 036 951, filed 7th May 1979.

Suitable polycarbonates include any having a molecular weight (weight average) of at least 20,000 up to 1 million. Preferred molecular weights of the polycarbonate are 20,000 to 40,000. Polycarbonates are well known commercially available materials. About 0 to 30, more preferably over 13% by weight, of the blend of plastics and flame retardants is polycarbonate.

The decabromodiphenyl oxide is a commercially available material. It must have an average particle size of less than 12 $\mu$m, and more preferably an average particle size of about 8 to 10 $\mu$m. Surprisingly, when the decabromodiphenyl oxide has average particle size within the essential, even more so in the preferred, range, the flame resistance, impact strength and heat distortion properties are excellent of the total composition as compared to compositions containing material of larger particle size. For example, decabromodiphenyl oxide from Great Lakes Chemical Corporation sold in 1978 under the trademark DE—83R having an average particle size of about 9.2 $\mu$m gave significantly better properties in this system than did a material having an average particle size of 16.6 $\mu$m identified in 1978 as Dow Chemical Corporation's FR—300BA. For DE—83R the range of particle sizes was 1 to 15 $\mu$m, whereas for FR—300BA the range of particle size was 1 to 140 $\mu$m. This discovery of

the advantages of smaller particle size material is especially surprising in view of the fact that a larger particle size modifier would be expected to give a better impact strength.

It is preferred to use metal oxide in combination with the decabromodiphenyl oxide, since it synergizes the activity of the decabromodiphenyl oxide. The metal oxide can be either antimony trioxide or zinc borate or a mixture thereof. Antimony oxide is preferred for its synergistic properties, but since zinc borate may be more economically advantageous, it may be partially or totally substituted for the antimony trioxide. The commercially available zinc borates are hydrated, containing about 3.5 moles of water, and are useful as the metal oxide synergist.

The preferred ratio of decabromodiphenyl oxide to metal compounds is 3:1 to 2:1 by weight.

Poly(tetrafluoroethylene) and/or fumed silica are also preferably included in the compositions of the inventions as co-synergist(s).

Broadly, the preferred amounts of decabromodiphenyl oxide and metal compound(s) are each 0.1 to 30%, based on weight of polyglutarimide. Based on polyglutarimide, impact modifier polymer, and optional polycarbonate, the weight ratios of decabromodiphenyl oxide to metal compound to blend of polyglutarimide and impact modifier (if any) is preferably 20:20:100 to 6:2:100, and more preferably 14:7:100 to 12:5:100.

The compositions of this invention are useful as molding or other forming compositions.

The following Example illustrates a few preferred embodiments of the invention. Unless otherwise specified, all parts and percentages are by weight.

Example and comparative tests

This Example illustrates the importance of the particle size of the decabromodiphenyl oxide. To a formulation of 31.68 parts of a polyglutarimide which was prepared according to the Belgian Patent 848,496 from methylamine and polymethyl methacrylate to an 83 to 85% by weight degree of imidization, were blended on a Killion extruder the following ingredients: 15 parts of an MBS impact modifier prepared in accordance with Example 1 of U.S. Patent 3,985,704, 15 parts of an acrylic impact modifier, 20 parts of polycarbonate, 5 parts of antimony oxide, 0.1 part phenolic antioxidant (American Cyanamid "Cyanox 1790"), 0.02 parts dilaurylthiodipropionate (American Cyanamid), 0.1 parts poly(tetrafluoroethylene) (Teflon 6 by duPont), and 0.1 parts stearamide. Six formulations were made, varying the decabromodiphenyl oxide ratio and type. The formulations were molded into specimens and tested for Gardner impact and UL—94 flammability rating (using 1/16 inch specimens). The results are reported in the following table. The DE—83R had an average particle size of 9.2 $\mu$m. The FR—300BA had an average particle size of 16.6 $\mu$m.

TABLE

| | | Decabromodiphenyl oxide | | | Gardner impact (VHIT) (in-lb) | Flammability | |
| | | Parts | Type | J | | UL—94 | Time to self-extinguish (sec) |
|---|---|---|---|---|---|---|---|
| Example | (a) | 13.0 | DE—83R | 12.43 | (110) | V—0 | 3.8 |
| " | (b) | 12.0 | DE—83R | 12.43 | (110) | V—0 | 2.1 |
| " | (c) | 11.0 | DE—83R | 11.30 | (100) | V—0 | 4.3 |
| Test | (a) | 13.0 | FR—300BA | 7.91 | (70) | F | above 15.5 |
| " | (b) | 12.0 | FR—300BA | 4.52 | (40) | F | above 15.5 |
| " | (c) | 11.0 | FR—300BA | 6.33 | (56) | F | above 15.8 |

## Claims

1. A composition comprising (a) polyglutarimide and (b) decabromidiphenyl oxide having an average particle size of less than 12 $\mu$m.

2. A composition as claimed in claim 1, further including one or both of the metal compounds antimony trioxide and zinc borate.

3. A composition as claimed in claim 2, further including acrylic-based or butadiene-based impact modifier.

4. A composition as claimed in claim 2 or 3 containing decabromodiphenyl oxide in an amount of 0.1 to 30% by weight, and the metal compound(s) in an amount of 0.1 to 30% by weight, based on polyglutarimide.

5. A composition as claimed in claim 2 or 3, wherein the weight ratio of decabromodiphenyl oxide to metal compound to total weight of polyglutarimide and impact modifier (if any) is 20:20:100 to 6:2:100.

6. A composition as claimed in claim 5, wherein the ratio is 14:7:100 to 12:5:100.

7. A composition as claimed in any preceding claim, further including poly(tetrafluoroethylene) and/or fumed silica.

8. A composition as claimed in any preceding claim, wherein the decabromodiphenyl oxide has an average particle size of 8 to 10 $\mu$m.

9. A composition as claimed in any preceding claim, further including up to 30% by weight polycarbonate.

## Revendications

1. Une composition comprenant (a) un polyglutarimide et (b) de l'oxyde de décabromodiphényle ayant une taille moyenne des particules inférieure à 12 $\mu$m.

2. Une composition comme revendiquée dans la revendication 1, comprenant de plus un des composés métalliques trioxyde d'antimoine et borate de zinc ou les deux.

3. Une composition comme revendiqué dans la revendication 2, comprenant de plus un modificateur de choc à based acrylique ou à base de butadiène.

4. Une composition comme revendiqué dans la revendication 2 ou 3 contenant l'oxyde de décabromodiphényle en une quantité de 0,1 à 30% en poids et le(s) composé(s) métallique(s) en une quantité de 0,1 à 30% en poids par rapport au polyglutarimide.

5. Une composition comme revendiqué dans la revendication 2 ou 3 dans laquelle le rapport pondéral de l'oxyde de décabromodiphényle au composé métallique au poids total du polyglutarimide et du modificateur de choc (éventuel) est de 20/20/100 à 6/2/100.

6. Une composition comme revendiqué dans la revendication 5, dans laquelle le rapport est de 14/7/100 à 12/5/100.

7. Une composition comme revendiqué dans l'une quelconque des revendications précédentes, comprenant de plus du poly(tétrafluoroéthylène) et/ou de la silice ultrafine.

8. Une composition comme revendiqué dans l'une quelconque des revendications précédentes dans laquelle l'oxyde de décabromodiphényle a une taille moyenne des particules de 8 à 10 $\mu$m.

9. Une composition comme revendiqué dans l'une quelconque des revendications précédentes, comprenant de plus jusqu'à 30% en poids de polycarbonate.

## Patentansprüche

1. Masse aus (a) Polyglutarimid und (b) Decabromdiphenyloxid mit einer durchschnittlichen Teilchengröße von weniger als 12 $\mu$m.

2. Masse nach Anspruch 1, dadurch gekennzeichnet, daß sie eine oder beide der Metallverbindungen Antimontrioxid sowie Zinkborat enthält.

3. Masse nach Anspruch 2, dadurch gekennzeichnet, daß sie außerdem ein Modifizierungsmittel auf Acryl- oder Butadienbasis enthält.

4. Masse nach Anspruch 2 oder 3, dadurch gekennzeichnet, daß sie Decabromdiphenyloxid in einer Menge von 0,1 bis 30 Gew.-% und die Metallverbindung (en) in einer Menge von 0,1 bis 30 Gew.-%, bezogen auf Polyglutarimid enthält.

5. Masse nach Anspruch 2 oder 3, dadurch gekennzeichnet, daß das Gew.-Verhältnis von Decabromdiphenyloxid zu Metallverbindung zu Gesamtgewicht von Polyglutarimid und Schlagfestigkeitsmodifizierungsmittel (falls vorhanden) 20:20:100 bis 6:2:100 beträgt.

6. Masse nach Anspruch 5, dadurch gekennzeichnet, daß das Verhältnis 14:7:100 bis 12:5:100 beträgt.

7. Masse nach einem der vorhergehenden Ansprüche, dadurch gekennzeichnet, daß sie außerdem Polytetrafluorethylen und/oder Fumed Silica enthält.

8. Masse nach einem der vorhergehenden Ansprüche, dadurch gekennzeichnet, daß das Decabromdiphenyloxid eine durchschnittliche Teilchengröße von 8 bis 10 $\mu$m besitzt.

9. Masse nach einem der vorhergehenden Ansprüche, dadurch gekennzeichnet, daß sie bis zu 30 Gew.-% Polycarbonat enthält.